# EUROPEAN PATENT SPECIFICATION

(11) **EP 3 227 589 B1**
(45) Date of publication and mention of the grant of the patent: **30.12.2020**
(21) Application number: 15801185.8
(22) Date of filing: 27.11.2015
(51) Int. Cl.: F04B 39/02, F04B 39/12, F04B 53/16, F16J 15/26, F16J 15/18

(54) **PACKING CASE FOR RECIPROCATING MACHINE AND METHOD OF ASSEMBLING THE SAME.**
VERKAPSELUNGSGEHÄUSE FÜR KOLBENMASCHINE UND VERFAHREN ZUR MONTAGE DAVON
BOÎTE À GARNITURE POUR MACHINE À PISTON ALTERNATIF ET SON PROCÉDÉ D'ASSEMBLAGE

(30) Priority: 05.12.2014 IT CO20140037
(43) Date of publication of application: 11.10.2017
(73) Proprietor: Nuovo Pignone S.r.l., 50127 Florence (IT)
(72) Inventor: MAGGI, Carmelo, 50127 Florence (IT); WOJNAR, Jan Pawel, 02-256 Warszawa (PL); SANESI, Michele, 50127 Florence (IT); TOGNARELLI, Leonardo, 50127 Florence (IT)
(74) Representative: BRP Renaud & Partner mbB Rechtsanwälte Patentanwälte Steuerberater
(86) International application number: PCT/EP2015/077914
(87) International publication number: WO 2016/087326

(56) References cited:
- EP-A1- 2 749 794
- US-A1- 2011 298 183
- US-B1- 6 932 351
- US-B1- 8 366 114

## Description

### TECHNICAL FIELD

Embodiments of the subject matter disclosed herein correspond to reciprocating machine, such as compressors and more particularly, but not exclusively, hypercompressors and packing cups and packing cases for those machines.

It is known that hypercompressors are reciprocating machines where a fluid is converted to an extremely high pressure (for example up to 3500 bar) because of a plunger compressing the fluid into a chamber; generally they can be single- or multi-staged.

### BACKGROUND ART

It is known in the state of the art to arrange a sealing and jacket around the plunger or more generally around a piston rod of a reciprocating machine, like compressor or similar.

Such jacket usually comprises a packing case that in turn comprises a plurality of packing cups.

Packing cups usually have a disc-like shape and they are provided with a hole in the centre through which the plunger or rod passes when it reciprocates; the packing cups are assembled aligned and side by side with each other.

Each packing cup comprises plunger sealing rings intended to provide a seal on the plunger or rod; such plunger sealing rings have to be lubricated in order to avoid frictions and wear against the plunger or rod; to this end the packing case is provided with ducts intended for the passage of the lubricant; lube ducts are therefore housed in the packing cups.

For example, with reference to a packing case comprising five packing cups, it is assembled with a first packing cup adjacent to a distribution cup (usually remotely from the compressor chamber) followed by a second, third, fourth and fifth successive packing cups. Usually a ring carrier and a pressure breaker cup, adjacent to the compressor chamber are provided adjacent to the fifth packing cup.

Lubrication, for example, provides to bring the lubricant to the second and fourth plunger sealing rings (placed between the first and the second packing cups and between the third and the fourth packing cups respectively) and to further lubricate the region between the fifth packing cup and the ring carrier.

To this end lube oil ducts passing through one or more of the packing cups are provided.

In details, with reference to the known art just described, the duct intended to bring the lubricant to the second plunger sealing ring comprises an initial portion that passes through the distribution cup, an intermediate portion that parallel- with respect to the plunger axis - passes through the first packing cup and an end portion - radial with respect to the plunger axis - ending in the region to be lubricated.

Similarly, the duct intended to bring the lubricant to the fourth plunger sealing ring comprises an initial portion that passes through the distribution cup, an intermediate portion that parallel- with respect to the plunger axis - passes through the first, the second and the third packing cups and an end portion - radial with respect to the plunger axis - ending in the region to be lubricated.

Still similarly, the duct intended to bring the lubricant between the fifth packing cup and the ring carrier comprises an initial portion that passes through the distribution cup, an intermediate portion that parallel- with respect to the plunger axis - passes through the first, the second, the third, the fourth and the fifth packing cups and an end portion - radial with respect to the plunger axis - ending in the region to be lubricated.

From this situation it results that each packing cup, depending on its position in the packing case, houses (or not) one or more parts of the intermediate portion of the different ducts: the fact of placing the several packing cups side by side in the assembled condition causes the parts of the duct intermediate portions to be joined till forming the complete ducts.

The duct intermediate portions are made as through holes passing from one face to the other one of the packing cup, while the duct end portions are made as radial grooves (with respect to the plunger axis) connected to the relevant duct intermediate portions and ending at the region to be lubricated.

For instance, in the example just described, the first packing cup is provided with three holes: each one is a part of the intermediate portion of the first, second, and third ducts respectively intended to bring the lubricant to the second and fourth plunger sealing ring and in the region between the fifth packing cup and the ring carrier respectively.

The second packing cup is on the contrary provided with two holes: each one is a part of the intermediate portion of the second and third ducts respectively intended to bring the lubricant to the fourth plunger sealing ring and in the region between the fifth packing cup and the ring carrier respectively; the second packing cup is further provided with a radial groove, which is the end portion of the first duct.

The third packing cup is provided with two holes: each one is a part of the intermediate portion of the second and third ducts respectively intended to bring the lubricant to the fourth plunger sealing ring and in the region between the fifth packing cup and the ring carrier respectively.

The fourth packing cup is on the contrary provided with one hole as a part of the intermediate portion of the third duct intended to bring the lubricant in the region between the fifth packing cup and the ring carrier; the fourth packing cup is further provided with a radial groove, which is the end portion of the second duct.

Finally the fifth packing cup is provided with one hole as a part of the intermediate portion of the third duct intended to bring the lubricant in the region between the fifth packing cup and the ring carrier which, on its turn, comprises a radial groove.

From such exemplary situation it is easy to understand how each packing cup is unique, meaning that, once its position inside the packing case is established, it has to comprise certain ducts and no other ones.

Briefly, the same situation occurs also in other cases, as for example in the packing case of US6,932,351.

Therefore, from the above, a first drawback of the known solutions is clear, which leads to produce each packing cup in a different manner depending on its position in the packing case; from this derives the need of having a plurality of single (first, second, third etc) packing cups in stock if it is necessary to replace one of them for maintenance reasons.

### BRIEF DESCRIPTION

Therefore there is a general need for an improved packing case for reciprocating machines.

The present invention is defined in the accompanying claims.

An important idea is to make the packing cups all equal to each other, and potentially to reduce manufacturing and warehousing costs.

Another important idea is a method of creating a plurality of service or auxiliary fluid ducts of different length and/or configuration in a machine, preferably a reciprocating machine, comprising the steps of:
A) providing a plurality of modules incorporating one or more portions of duct,
B) integrating the plurality of modules in a corresponding plurality of components, and
C) positioning the components of said plurality adjacent to each other;
wherein each of the components integrates a set of modules of different types;
wherein at least one or only one of the modules of each component is used for creating service or auxiliary fluid ducts.

First embodiments of the subject matter disclosed herein correspond to a packing case for a reciprocating machine; such packing case is able to provide a seal along and around at least a part of a movable plunger or piston rod of the reciprocating machine; the packing case comprises a plurality of packing cups, each packing cup comprising on its turn a body with a hole for the passage of the plunger or rod and a sealing ring seat for housing a sealing ring which slidably bear against the plunger or rod to provide sealing; said packing cups are aligned with each other in series relative to the respective holes for the passage of the plunger or rod; the packing case comprises a plurality of lube oil ducts for supplying lube oil from an end of the packing case in an area of sealing ring seat.

According to the idea above, it is provided that all the packing cups are identical each other; each packing cup comprises sectors angularly offset with each other, each sector being provided at least by lube oil duct portions, the packing cups being selectively positionable with each other to bring, for each packing cup, one sector at a time in an activation position; in such activation position at least some of the lube oil duct portions of said sector is operatively connected with the lube oil duct portions of a sector in the activation position of an adjacent packing cup so as to form said lube oil ducts; once positioned, the packing cups can be locked each by each in a position corresponding to the activation position of a chosen circular sector.

In this way it is possible to have a packing case composed of all identical packing cups, which, during an assembly operation of the packing case, are placed, each by each, in different positions with respect to each other: in said positions one sector for each packing cup is activated (and -in use- supplied by lube oil) so that to form the whole lube oil ducts of the packing case itself.

It is therefore possibile to overcome the above cited problems of the prior art, since it is possibile to have only one kind of packing cup used for the entire packing case.

Manufacturing problems, availability and cost problems related to the known art have therefore brilliantly overcome by the above mentioned idea: only some lube oil duct portions for each sector of each packing cup will be active (that is, in fluid communication between one packing cup and another one and -in use- supplied by lubricant) and it will be possible to generate different paths of each lube oil duct by using always the same type of packing cup, suitably positioned before locking it in position, such to activate only one of the available sectors for each packing cup, depending to the position of the same packing cup in the packing case.

The remaining lube oil duct portions for each sector of each packing cup that are not in the activation position are not supplied by lubricant.

Second embodiments of the subject matter disclosed herein correspond to a packing cup for a packing case of reciprocating machines, comprising a body with a hole for the passage of a plunger or rod of the reciprocating machine, said hole having a first longitudinal axis, a sealing ring seat for housing a sealing ring which slidably bear against the plunger or rod to provide sealing, wherein the packing cup comprises sectors angularly offset with each other, each sector being provided at least by lube oil duct portions, in each sector of the packing cup a plurality of available positions being grouped, every available position of such plurality being lined on the same circumference having its center on said first axis, each available position of such plurality being used for one between:
- an axial lube oil duct portion extending between opposed faces of said packing cup
- a radial lube oil duct portion, preferably a radial groove, extending radially to the sealing ring seat of the packing cup
- a stopping wall
in which, for each packing cup, the number of sectors is at least equal or major than the number of available positions of each sector,
in which different sectors of the same packing cup have said available positions used for a number of axial lube oil duct portions decreasing from a maximum number equal to the number of sectors, at least one of the remaining available positions of each sector being used for a a radial lube oil duct portion, preferably a radial groove.

Third embodiments of the subject matter disclosed herein correspond to a reciprocating machine, in particular a compressor, an hypercompressor or the like, provided by such a packing case.

### BRIEF DESCRIPTION OF DRAWINGS

The accompanying drawings, which are incorporated herein and constitute a part of the specification, illustrate exemplary embodiments of the present invention and, together with the detailed description, explain these embodiments. In the drawings:
Fig.1 shows a sectional view of part of a reciprocating machine provided with a packing case according to a first embodiment;
Fig. 2 shows a perspective view of one packing cup of the packing case of fig. 1;
Fig. 3 shows an enlarged detail of fig. 2;
Fig. 4 shows perspective and exploded view of the packing case of fig. 1;
Fig. 5 shows, in transparency, lube ducts formed in the packing case of fig. 1;
Fig. 6 shows a sectional view of part of a reciprocating machine provided with the packing case of fig. 1 and a surrounding sheat; and
Fig. 7 shows an enlarged detail of fig. 6.

### DETAILED DESCRIPTION

The following description of exemplary embodiments refers to the accompanying drawings.

The following description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to the idea herein described, the method of creating a plurality of service or auxiliary fluid ducts of different length and/or configuration in a machine, preferably a reciprocating machine, comprising the steps of:
A) providing a plurality of modules incorporating one or more portions of duct,
B) integrating the plurality of modules in a corresponding plurality of components, and
C) positioning the components of said plurality adjacent to each other;
each of the components integrates a set of modules of different types and at least one or only one of the modules of each component is used for creating service or auxiliary fluid ducts.

In general such service or auxiliary fluid ducts can be oil or lubricant or also different fluid that reach different areas of the machine by following a plurality of fluid ducts.

Preferably, each of the components integrates a set of modules of different types at a corresponding set of angular positions;
and, at step C above, each of the components is rotated before being positioned so as to align at least one or only one of its modules with at least one or only one of the modules of adjacent components.

Preferably, all the components of said plurality are identical and each of the components of said plurality integrates the same set of modules of different types.

In the following said a method will be described with reference to the attached figures; in the exemplary embodiment herein below described, the above mentioned "components" are embodied by packing cups, "modules" are embodied by sectors, and the service or auxiliary fluid is oil or lubricant.

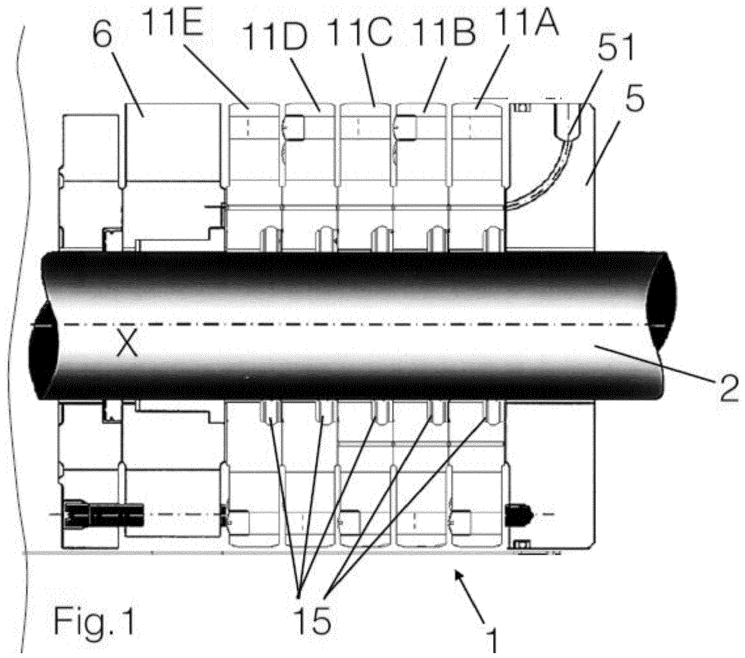

With reference to fig.1 enclosed, a sectional view of part of a reciprocating machine provided with a packing case according to a first embodiment is shown.

The packing case 1 serves for providing a seal along and around at least a part of a movable plunger 2 (or piston rod) of the reciprocating machine (not shown in its entirety).

The packing case 1 comprises at least a plurality of packing cups, in this non limiting example there are five packing cups 11A-11E, although a different number of them is provided in different embodiments (not shown) of the subject matter herein disclosed.

The packing case 1 further comprises
- a distribution cup 5, adjacent to a first packing cup 11A, and
- a ring carrier 6, adjacent to the last packing cup 11E.

The distribution cup 5 is provided by one fixed lubricant supply duct 51, on its turn coupled with a lubricant source (not shown) such a lubricant tank, a lubricant pump, a lubricant piping or similar.

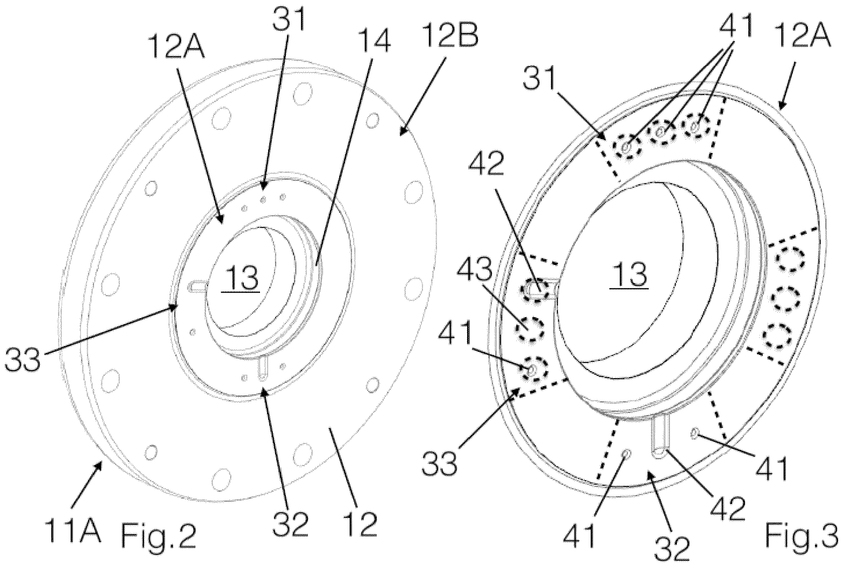

With reference also to fig. 2 and 3, each packing cup 11A-11E comprises a body 12 with a hole 13 for the passage of the plunger or rod 2.

Preferably the shape of the body is circular, as shown, with the hole 13 having the same center of the body; more in general, other different shapes than the ones shown here could be also used.

Each packing cup 11A-11E further comprises a sealing ring seat 14 for housing a sealing ring 15 (see fig.1). The latter surrounds the hole 13 for the plunger 2 and, in an assembled condition, slidably bear against the plunger 2 itself to provide sealing.

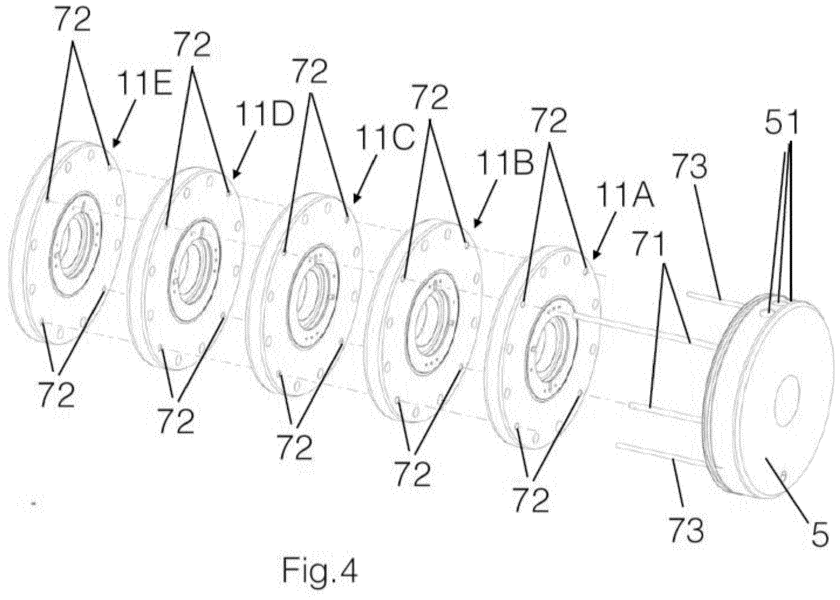

As can be best seen in fig. 1 or in the exploded view of fig.4, in the packing case 1 the packing cups 11A-11E are aligned with each other in series relative to the respective holes 13 for the passage of the plunger or rod 2.

The packing case 1 further comprises a plurality of lube oil ducts A, B, C for supplying lube oil (or -more generally- lubricant) from an end of the packing case in an area of the sealing ring seat 14, in order to lubricate the latter and/or the sealing ring 15.

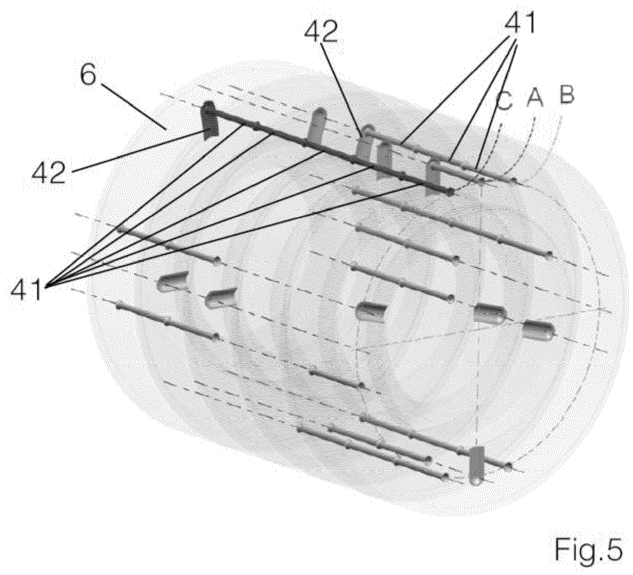

In the non limiting example, there are three lube oil ducts A, B, C (see also fig. 5):
- a first lube oil duct A for supplying lubricant into an area of the (second) sealing ring seat 14 of the second packing cup 11B,
- a second lube oil duct B for supplying lubricant into an area of the (fourth) sealing ring seat 14 of the fourth packing cup 11D
- a third lube oil duct C for supplying lubricant into an area between the fifth packing cup 11E and the ring carrier 5.

According to the idea herein described, and as can be seen in fig. 4, all the packing cups 11A-11E of the packing case 1 are identical each other, so as obtain the above mentioned advantages.

To this extent and for allowing to create the different lube oil ducts A,B,C, each packing cup 11A-11E comprises sectors 31, 32, 33 angularly offset with each other, each sector 31, 32, 33 comprising at least lube oil duct portions 41,42.

In fig. 2 and 3 only the packing cup 11A is shown, the remaining being identical to this one.

Particularly, in fig. 3, such sectors 31, 32, 33 are highlighted by means of dashed lines indicating their position on the packing cup 11A; in fig. 2 the sectors 31, 32, 33, though not highlighted, are nevertheless present, since those "sectors" are merely areas of the packing cup 11A itself.

The packing cups 11A-11E are selectively positionable with each other to bring, for each packing cup 11A-11E, one sector 31, 32, 33 at a time in an "activation position".

Particularly, when each sector is a circular sector 31, 32, 33, the packing cups 11 are selectively positionable with each other by means of a rotation around a first axis coincident to a central longitudinal axis X of the hole 13 for the plunger or rod 2.

In the activation position at least some of the lube oil duct portions 41, 42 of said sector 31, 32, 33 are operatively connected with the lube oil duct portions 41, 42 of a sector 31, 32, 33 in the activation condition of an adjacent packing cup 11A-11E so as to form said lube oil ducts A, B, C.

During operation, the lube oil duct portions 41, 42 that are in the activation position are supplied by lubricant by means of the fixed lubricant supply duct 51 of the distribution cup 5; remaining oil duct portions of sectors in a non-activation position (every position different than the activation position) are not supplied by lubricant or oil.

The packing cups 11A-11E are then lockable each by each at one position corresponding to the activation position of a circular sector 31, 32, 33 of the packing cup, in a way that will be described later on.

Preferably, for each sector 31, 32, 33 of each packing cup 11A-11E a plurality of available positions are grouped, every available position of such plurality being lined on the same circumference having its center on said first axis X.

Looking at fig.3, for clarification extent, there are highlighted, for two sector, namely 31, 33, the available positions, shown as dashed circles; available positions are therefore areas of one sector that are lined on the same circumference having its center on said first axis X.

All the available positions of all the sectors are on the same circumference, while all such circumferences of different packing cups have all the center on the first axis X and the same radius.

Each available position of such plurality is used for one between:
- an axial lube oil duct portion 41, extending between opposed faces of the packing cup 11A-11E
- a radial lube oil duct portion, extending radially to the sealing ring seat 14 of the same packing cup 11A-11E
- a stopping wall 43.

Preferably the radial lube oil duct portion is a radial groove 42.

For example, looking at fig. 3, sector 31 has all the available positions (three in this example) used for axial lube oil duct portions 41, while sector 33 has one available position used for an axial lube oil duct portion 41, one used for a radial groove 42 and one used for a stopping wall 43. The remaining sector 32 (in which the available positions are not highlighted) has two available positions used for a axial lube oil duct portions 41 and one used for a radial groove 42.

During an assembly operation of the packing case 1, the packing cups 11A-11E are placed, each by each, in different (in this example, angular) positions with respect to each other: in said positions one sector for each packing cup is activated (and -in use-supplied by lube oil), and, in major detail, at least some of the duct portions 41, 42 of said sector are supplied by oil or lubricant: in this way, activating only one of the available sectors for each packing cup (depending to the position of the same packing cup in the packing case), it is possibile to realize the whole lube oil ducts A, B, C of the packing case 1 itself.

Preferably, for each packing cup 11A-11E, the number of sectors 31-33 is at least equal, or major, than the number of available positions of each sector; to this extent in fig. 4 there is shown in dashed lines an additional, optional, spare sector, which, in this example is not in use.

It has to be noted that different sectors 31, 32, 33 of the same packing cup 11 have said available positions used for a number of axial lube oil duct portions 41 decreasing from a maximum number equal to the number of lube oil ducts A, B, C of the packing case 1.

So, for example, if the number of lube oil ducts A, B, C is three, then there will be a sector having three axial lube oil duct portions 41, another sector having two axial lube oil duct portions 41, and another sector having one axial lube oil duct portions 41.

In this case, preferably, at least one of the remaining available positions of each sector 31, 32, 33 is used for a a radial lube oil duct portion, such as a radial groove 42.

When assembling the packing case 1, the packing cups 11A-11E as described are assembled, starting from a first packing cup 11A until a last packing cup 11E, and the first packing cup 11A has in the activation position a sector, 31, having a maximum number of axial lube oil duct portion 41, while the last packing cup 11E has in the activation position a minimum number of axial lube oil duct portion 41.

Remaining intermediate packing cups 11B, 11C, 11D between the first 11A and the last 11E packing cup, have in said activation position, sectors 31, 32, 33 provided by a number of axial lube oil duct portion 41 equal or less that the ones 41 of the immediately preceding packing cup in a progression starting from the first 11A to the last 11E packing cup.

In this way it is possible to align axial lube oil duct portion 41 of adjacent packing cups 11A-11F for realizing a number of lube oil ducts A, B, C that decreases from the first 11A to the last 11E packing cup of said packing case 1.

In this way, as can best be seen in fig. 5, each lube oil duct A, B, C is formed by lube oil duct portions 41,42 of different packing cups sectors in the activation position: particularly each oil duct A, B, C comprises one or more axial lube oil duct portions 41 and one radial groove 42.

It can be noted in the non limiting example, that lube oil duct A is formed by one axial lube oil duct portions 41 (of packing cup 11A) and one radial groove 42 (of packing cup 11B); lube oil duct B is formed by three axial lube oil duct portions 41 (of packing cup 11A, 11B, 11C) and one radial groove 42 (of packing cup 11D); lube oil duct C is formed by five axial lube oil duct portions 41 (of packing cup 11A-11E) and one radial groove 42 (provided on the ring carrier 6).

Looking at the figures, in the non limiting example of the present embodiment, the whole number of lube oil ducts decreases from three to one starting from the first packing cup 11A to the last 11E.

In operation, the lube oil duct portions 41,42 in the activation position of the first packing cup 11A are aligned with the fixed lubricant supply duct 51 of the distribution cup 5, so that they can be supplied by the latter; the fixed lubricant supply duct 51 can be either in form of one single duct, or in form of a multiple channel duct.

As a matter of fact, in this preferred embodiment, the packing comprises five packing cup and three lube oil ducts A,B,C, and, in turn, each packing cup 11 comprises a first 31, a second 32 and a third 33 angularly offset circular sectors.

In this embodiment, the first circular sector 31 comprises three axial portions of lube oil ducts 41, the second circular sector 32 comprises two lube oil duct portions 41 and a radial lube oil duct portion, preferably a radial groove 42, and the third circular sector 33 comprises one lube oil duct portion 41, one radial lube oil duct portion, preferably a radial groove 42 and one stopping wall 43.

Preferably, when no spare sectors are provided and in the case of three sectors as already described, the third 33 circular sector is arranged between the second 32 and the first circular sector 31, rotated by 90° with respect to both of them.

It has to be noted that, in the preferred solution, the axial portion of the lube oil duct 41 comprises a through hole passing between two opposite faces of the body 12 of the packing cup 11A-11E arranged parallel to the first axis of the hole 13 for the plunger or rod 2 and the radial lube oil duct portion 42 comprises a groove made on a face of the body 12 of the packing cup 11A-11E and arranged radially with respect to the first axis of the hole 13 for the plunger or rod.

In an embodiment, the body 12 of each packing cup 11A-11E comprises a packing cup internal part 12A and a packing cup external part 12B surrounding the packing cup internal part.

Said two part 12A and 12B can be separated and coupled together to the extent of forming the body 12.

In this embodiment, sectors 31, 32, 33 are provided at said packing cup internal part 12A, as shown in the figures.

In order to lock in position the packing cups 11A-11E, blocking elements are provided,; preferably said blocking elements are suitable for coupling each packing cup 11A-11E with at least one between the distribution cup 5 or the ring carrier 6.

Preferably, looking at fig. 4, as in the example shown, such blocking elements are suitable for coupling each packing cup 11A-11E with the distribution cup 5.

More preferably, the blocking elements comprises at least one, preferably two, tie rod 71 and respective tie rod seats 72 of each packing cup 11A-11E, in which the tie rod 71 is housed.

Still more preferably, the blocking elements comprises also at least one, preferably two, locating pin 73, which helps in the assembly operation.

Each packing cup 11A-11E comprises at least one, preferably more than one, still more preferably four, tie rod seats 72 so to allow for locking the packing cups 11A-11E in a preferred angle position.

In this non limiting example each packing cup 11A-11E can be locked in position at interval of 45° of rotation, so as to have one chosen sector at a time in the activation position.

The packing case 1, in operation, will be cooled.

Reference is made now to fig.s 6 and 7.

Preferably, in the assembled condition, at least between the packing cup external parts 12B of a pair of adjacent packing cups 11A-11E a passageway 91 is provided for a fluid coolant, that, in this way, became in contact with a large surface area of the packing cup external parts 12B, for a better cooling effect.

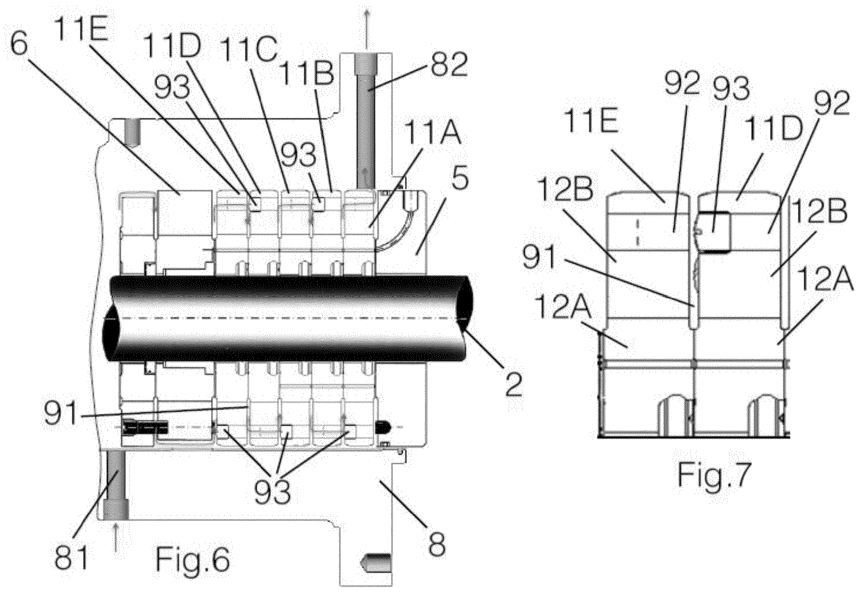

This can be obtained, for example, by having a different thickness between the body external part 12B and the internal part 12A, as shown in the detail of fig. 7.

Preferably, body internal parts 12A of each packing cup 11A-11E are in contact each other when the packing case 1 is assembled; the thinner external parts 12B of each packing cup 11A-11E in this condition rests at a certain distance, so creating the passageway 91, in which fluid coolant can pass.

The packing case 1 further comprises an external sheat 8, that in the example of fig. 6, houses the packing cups 11A-11E as well as the ring carrier 6 and part of the distribution cup 5, which closes one end of the external sheat 8.

The external sheat 8 is provided at least by a coolant inlet 81, in operation connected to a coolant source, and by a coolant outlet, in operation connected to a coolant discharge.

For allowing fluid coolant passing into contact with the major area of the packing cups, so as to maximize the cooling effect, a labyrinth like flow path of the coolant is provided (shown by arrows of fig. 6).

To this extent each packing cup 11A-11E is provided by coolant holes 92, shown also in fig. 2; coolant holes 92 are through holes passing between two opposite faces of the body external part 12B of each packing cup 11A-11E, still preferably arranged parallel to the first axis of the hole 13 for the plunger or rod 2.

When the packing cup is assembled, coolant holes 92 are in fluid communication with the passageway 91 formed between two adjacent packing cups 11A-11E.

In order to realize the labyrinth like flow path, plugs 93 are provided, that closes only some coolant holes 92 of a packing cup 11A-11E: for example closing by plugs 93 alternatively positioned holes 92 of two adjacent packing cups, the coolant flows in the passageway 91 in contact with substantially the entire surface of the two adjacent packing cups, for an optimal cooling.

Using plugs 93 allows to close only chosen holes 92 in function of the angular position of each packing cup and its position in the packing case 1.

## Claims

1. A packing cup (11A-11E) for a packing case (1) of reciprocating machines, comprising:
a body (12) with a hole (13) for the passage of a plunger or rod (2) of the reciprocating machine, said hole (13) having a first longitudinal axis,
a sealing ring seat (14) for housing a sealing ring (15) which slidably bear against the plunger or rod (2) to provide sealing,
wherein
said packing cup (11A-11E) comprises sectors (31, 32, 33) angularly offset with each other, each sector (31, 32, 33) being provided at least by lube oil duct portions (41, 42)
in each sector (31, 32, 33) of the packing cup (11A-11E) a plurality of available positions being grouped;
every available position of such plurality being lined on the same circumference having its center on said first axis;
each available position of such plurality being used for one between:
- an axial lube oil duct portion (41) extending between opposed faces of said packing cup (11A-11E),
- a radial lube oil duct portion, preferably a radial groove (42), extending radially to the sealing ring seat (14) of the packing cup (11A-11E),
- a stopping wall (43);
in which different sectors (31,32,33) of the same packing cup (11A-11E) have said available positions used for a number of axial lube oil duct portions (41) decreasing from a maximum number equal to the number of sectors (31, 32, 33), at least one of the remaining available positions of each sector (31, 32, 33) being used for a radial lube oil duct portion, preferably a radial groove (42).

2. The packing cup (11A-11E) of claim 1, comprising first (31), second (32) and third (33) angularly offset circular sectors, wherein:
- the first circular sector (31) comprises three axial portions of lube oil ducts (41),
- the second circular sector (32) comprises two lube oil duct portions (41) and a radial lube oil duct portion, preferably a radial groove (42),
- the third circular sector (33) comprises one lube oil duct portion (41), one radial lube oil duct portion, preferably a radial groove (42) and one stopping wall (43).

3. The packing cup (11A-11E) of claim 1 or 2, comprising a packing cup internal part (12A) and a packing cup external part (12B) surrounding the packing cup internal part (12A), said sectors (31, 32, 33) being provided at said packing cup internal part (12A).

4. A packing case (1) for a reciprocating machine to provide a seal along and around at least a part of a movable plunger (2) or piston rod of the reciprocating machine,
comprising a plurality of packing cups (11A-11E) of any one of the preceding claims; said packing cups (11A-11E) being aligned with each other in series relative to the respective holes (13) for the passage of the plunger or rod (2);
said packing case (1) comprising a plurality of lube oil ducts (A, B, C) for supplying lube oil from an end of the packing case in an area of sealing ring seat (14);
wherein
all the packing cups (11A-11E) of the packing case (1) are identical each other;
the packing cups (11A-11E) being selectively positionable with each other to bring,
for each packing cup (11A-11E), one sector (31, 32, 33) at a time in an activation position, in such activation position at least some of the lube oil duct portions (41, 42) of said sector (31, 32, 33) being operatively connected with the lube oil duct portions (41, 42) of a sector (31, 32, 33) in the activation condition of an adjacent packing cup (11A-11E) so as to form said lube oil ducts (A, B, C);
the packing cups (11A-11E) being lockable each by each at one position corresponding to the activation position of a circular sector (31, 32, 33).

5. The packing case (1) of claim 4, further comprising a distribution cup (5) provided at least by one fixed lubricant supply duct (51), said activation position corresponding to a position in which at least some of the lube oil duct portions (41,42) of a sector (31, 32, 33) in an activation position are in fluid communication with said fixed lubricant supply duct (51).

6. The packing case (1) of claim 4 or 5, in which each sector is a circular sector (31, 32, 33), the packing cups (11A-11E) being selectively positionable with each other by means of a rotation around a first axis coincident to a central longitudinal axis of the hole (13) for the plunger or rod (2).

7. The packing case (1) of claim 6, in which for each sector (31, 32, 33) of each packing cup (11A-11E) a plurality of available positions are grouped;
every available position of such plurality being lined on the same circumference having its center on said first axis;
each available position of such plurality being used for one between:
- an axial lube oil duct portion (41) extending between opposed faces of said packing cup (11A-11E),
- a radial lube oil duct portion, preferably a radial groove (42), extending radially to the sealing ring seat (14) of the packing cup (11A-11E),
- a stopping wall (43);
in which, for each packing cup (11A-11E), the number of sectors (31, 32, 33) is at least equal or major than the number of lube oil ducts (A, B, C) of the packing case (1);
in which different sectors (31, 32, 33) of the same packing cup (11A-11E) have said available positions used for a number of axial lube oil duct portions (41) decreasing from a maximum number equal to the number of lube oil ducts (A, B, C) of the packing case (1), at least one of the remaining available positions of each sector (31, 32, 33) being used for a a radial lube oil duct portion, preferably a radial groove (42);
said packing cups (11A-11E) being assembled to form the packing case, starting from a first packing cup (11A) until a last packing cup (11E) ;
in which the first packing cup (11A) has in said activation position a sector (31) having a maximum number of axial lube oil duct portion (41);
said last packing cup (11E) having in said activation position a minimum number of axial lube oil duct portion (41);
remaining intermediate packing cups (11B, 11C, 11D) between the first (11A) and the last (11E) packing cup, having, in said activation position, sectors (31, 32, 33) provided by a number of axial lube oil duct portion (41) equal or less that the ones (41) of the immediately preceding packing cup in a progression starting from the first (11A) to the last (11E) packing cup so as to align axial lube oil duct portion (41) of adjacent packing cups (11A-11E) for realizing a number of lube oil ducts (A, B, C) decreasing from the first (11A) to the last (11E) packing cup of said packing case (1).

8. The packing case of claim 7, wherein the packing case comprises five packing cup and three lube oil ducts (A, B, C), and, in turn, each packing cup (11A-11E) comprises a first (31), a second (32) and a third (33) angularly offset circular sectors, wherein:
- the first circular sector (31) comprises three axial portions of lube oil ducts (41),
- the second circular sector (32) comprises two lube oil duct portions (41) and a radial lube oil duct portion, preferably a radial groove (42),
- the third circular sector (33) comprises one lube oil duct portion (41), one radial lube oil duct portion, preferably a radial groove (42) and one stopping wall (43).

9. The packing case (1) of one or more of the claims 6 to 8, wherein the axial portion of the lube oil duct (41) comprises a through hole passing between two opposite faces of the body (12) of the packing cup (11A-11E) arranged parallel to the first axis of the hole (13) for the plunger or rod (2) and the radial lube oil duct portion (42) comprises a groove made on a face of the body (12) of the packing cup (11A-11E) and arranged radially with respect to the first axis of the hole (13) for the plunger or rod.

10. The packing case (1) of one or more of the preceding claims 4 to 9, comprising blocking elements for fixing in position each packing cup (11A-11E), preferably by coupling each packing cup (11A-11E) with at least the distribution cup (5), still more preferably said blocking elements comprising at least one, preferably two, tie rod (71) and respective tie rod seats (72) in each packing cup (11A-11E), in which the tie rod (71) is housed.

11. The packing case (1) of one or more of the preceding claims 4 to 10, wherein the body (12) of each packing cup comprises a packing cup internal part (12A) and a packing cup external part (12B) surrounding the packing cup internal part (12A), said sectors (31, 32, 33) being provided at said packing cup internal part (12A).

12. The packing case (1) of claim 11, wherein in the assembled condition, between the packing cup external parts (12B) of a pair of adjacent packing cups (11A-11E) a hollow passageway (91) is made for a fluid coolant.

13. The packing case (1) of one or more of claims 11 or 12, further comprises an external sheat (8) that houses at least the packing cups (11A-11E), said external sheat (8) being provided at least by a coolant inlet (81) and a coolant outlet (82), coolant holes (92) being provided in each packing cup (11A-11E) as through holes passing between two opposite faces of the body external part (12B) of each packing cup (11A-11E), at least part of said coolant holes (92) of each packing cup (11A-11E) being in fluid communication with said passageway (91).

14. A reciprocating machine comprising a packing case (1) of claims 4 to 14.

15. A method of creating a plurality of service or auxiliary fluid ducts of different length and/or configuration in a machine, preferably a reciprocating machine, comprising the steps of:
A) providing a plurality of sectors (31,32,33) incorporating one or more portions of duct,
B) integrating the plurality of sectors (31,32,33) in a corresponding plurality of packing cups (11A-11E) of any one of claims 1 to 3;
and
C) positioning the packing cups (11A-11E) of said plurality adjacent to each other; wherein each of the packing cups (11A-11E) integrates a set of sectors (31,32,33) of different types;
wherein at least one or only one of the sectors (31,32,33) of each packing cups (11A-11E) is used for creating service or auxiliary fluid ducts.

## Patentansprüche

1. Verkapselungsschale (11A-11E) für ein Verkapselungsgehäuse (1) von Kolbenmaschinen, umfassend:
einen Körper (12) mit einem Loch (13) für den Durchgang eines Kolbens oder einer Stange (2) der Kolbenmaschine, wobei das Loch (13) eine erste Längsachse aufweist,
einen Dichtungsringsitz (14) zum Aufnehmen eines Dichtungsrings (15), der verschiebbar an dem Kolben oder der Stange (2) anliegt, um eine Abdichtung bereitzustellen, wobei die Verkapselungsschale (11A-11E) Sektoren (31, 32, 33) umfasst, wobei jeder Sektor (31, 32, 33) mindestens durch Schmierölkanalabschnitte (41, 42) in jedem Sektor (31, 32, 33) der Verkapselungsschale (11A-11E) bereitgestellt wird, wobei eine Vielzahl von verfügbaren Positionen gruppiert ist; wobei jede verfügbare Position dieser Vielzahl auf demselben Umfang aufgereiht ist, dessen Mittelpunkt auf der ersten Achse liegt; wobei jede verfügbare Position dieser Vielzahl für eins der folgenden verwendet wird:
- einen axialen Schmierölkanalabschnitt (41), der sich zwischen gegenüberliegenden Flächen der Verkapselungsschale (11A-11E) erstreckt,
- einen radialen Schmierölkanalabschnitt, vorzugsweise eine radiale Nut (42), die sich radial zum Dichtungsringsitz (14) der Verkapselungsschale (11A-11E) erstreckt,
- eine Stoppwand (43);
wobei verschiedene Sektoren (31, 32, 33) derselben Verkapselungsschale (11A-11E) die verfügbaren Positionen zur Verwendung für eine Anzahl von axialen Schmierölkanalabschnitten (41) aufweisen, die von einer maximalen Anzahl gleich der Anzahl der Sektoren (31, 32, 33) abnimmt, wobei mindestens eine der verbleibenden verfügbaren Positionen jedes Sektors (31, 32, 33) für einen radialen Schmierölkanalabschnitt, vorzugsweise eine radiale Nut (42), verwendet wird.

2. Verkapselungsschale (11A-11E) nach Anspruch 1, umfassend einen ersten (31), einen zweiten (32) und einen dritten (33) winkelmäßig versetzten Kreissektor, wobei:
- der erste Kreissektor (31) drei axiale Abschnitte von Schmierölkanälen (41) umfasst,
- der zweite Kreissektor (32) zwei Schmierölkanalabschnitte (41) und einen radialen Schmierölkanalabschnitt, vorzugsweise eine radiale Nut (42), umfasst,
- der dritte Kreissektor (33) einen Schmierölkanalabschnitt (41), einen radialen Schmierölkanalabschnitt, vorzugsweise eine radiale Nut (42) und eine Stoppwand (43) umfasst.

3. Verkapselungsschale (11A-11E) nach Anspruch 1 oder 2, umfassend einen Verkapselungsschaleninnenteil (12A) und einen Verkapselungsschalenaußenteil (12B), der den Verkapselungsschaleninnenteil (12B) umgibt, wobei die Sektoren (31, 32, 33) an dem Verkapselungsschaleninnenteil (12A) bereitgestellt sind.

4. Verkapselungsgehäuse (1) für eine Kolbenmaschine, um eine Dichtung entlang und um mindestens einen Teil eines beweglichen Kolbens (2) oder einer Kolbenstange der Kolbenmaschine bereitzustellen, umfassend eine Vielzahl von Verkapselungsschalen (11A-11E) nach einem der vorstehenden Ansprüche; wobei die Verkapselungsschalen (11A-11E) miteinander in Reihe relativ zu den jeweiligen Löchern (13) für den Durchgang des Kolbens oder der Stange (2) ausgerichtet sind; wobei das Verkapselungsgehäuse (1) eine Vielzahl von Schmierölkanälen (A, B, C) zum Zuführen von Schmieröl von einem Ende des Verkapselungsgehäuses in einem Bereich des Dichtringsitzes (14) umfasst; wobei alle Verkapselungsschalen (11A-11E) des Verkapselungsgehäuses (1) untereinander identisch sind; wobei die Verkapselungsschalen (11A-11E) selektiv miteinander positionierbar sind, um für jede Verkapselungsschale (11A-11E) jeweils einen Sektor (31, 32, 33) in eine Aktivierungsposition zu bringen, wobei in dieser Aktivierungsposition zumindest einige der Schmierölkanalabschnitte (41, 42) des Sektors (31, 32, 33) mit den Schmierölkanalabschnitten (41, 42) eines Sektors (31, 32, 33) im Aktivierungszustand einer benachbarten Verkapselungsschale (11A-11E) wirkverbunden sind, um die Schmierölkanäle (A, B, C) zu bilden; wobei die Verkapselungsschalen (11A-11E) jeweils für sich in einer Position verriegelbar sind, die der Aktivierungsposition eines Kreissektors (31, 32, 33) entspricht.

5. Verkapselungsgehäuse (1) nach Anspruch 4, ferner umfassend eine Verteilungsschale (5), die durch mindestens einen fest angeordneten Schmiermittelzufuhrkanal (51) bereitgestellt wird, wobei die Aktivierungsposition einer Position entspricht, in der mindestens einige der Schmierölkanalabschnitte (41, 42) eines Sektors (31, 32, 33) in einer Aktivierungsposition in Fluidverbindung mit dem fest angeordneten Schmiermittelzufuhrkanal (51) stehen.

6. Verkapselungsgehäuse (1) nach Anspruch 4 oder 5, wobei jeder Sektor ein Kreissektor (31, 32, 33) ist, wobei die Verkapselungsschalen (11A-11E) mittels einer Drehung um eine erste Achse, die mit einer zentralen Längsachse des Lochs (13) für den Kolben oder die Stange (2) zusammenfällt, selektiv miteinander positionierbar sind.

7. Verkapselungsgehäuse (1) nach Anspruch 6, wobei für jeden Sektor (31, 32, 33) jede Verkapselungsschale (11A-11E) eine Vielzahl von verfügbaren Positionen gruppiert sind; wobei jede verfügbare Position dieser Vielzahl auf demselben Umfang aufgereiht ist, dessen Mittelpunkt auf der ersten Achse liegt; wobei jede verfügbare Position dieser Vielzahl für eins der folgenden verwendet wird:
- einen axialen Schmierölkanalabschnitt (41), der sich zwischen gegenüberliegenden Flächen der Verkapselungsschale (11A-11E) erstreckt,
- einen radialen Schmierölkanalabschnitt, vorzugsweise eine radiale Nut (42), die sich radial zum Dichtungsringsitz (14) der Verkapselungsschale (11A-11E) erstreckt,
- eine Stoppwand (43);
wobei für jede Verkapselungsschale (11A-11E) die Anzahl der Sektoren (31, 32, 33) mindestens gleich oder größer als die Anzahl der Schmierölkanäle (A, B, C) des Verkapselungsgehäuses (1) ist; wobei verschiedene Sektoren (31, 32, 33) derselben Verkapselungsschale (11A-11E) die verfügbaren Positionen zur Verwendung für eine Anzahl von axialen Schmierölkanalabschnitten (41) aufweisen, die von einer maximalen Anzahl gleich der Anzahl der Schmierölkanäle (A, B, C) des Verkapselungsgehäuses (1) abnimmt, wobei mindestens eine der verbleibenden verfügbaren Positionen jedes Sektors (31, 32, 33) für einen einen radialen Schmierölkanalabschnitt, vorzugsweise eine radiale Nut (42), verwendet wird; wobei die Verkapselungsschalen (11A-11E) zu dem Verkapselungsgehäuse zusammengebaut werden, beginnend mit einer ersten Verkapselungsschale (11A) bis zu einer letzten Verkapselungsschale (11E); wobei die erste Verkapselungsschale (11A) in der Aktivierungsposition einen Sektor (31) mit einer maximalen Anzahl von axialen Schmierölkanalabschnitten (41) aufweist; wobei die letzte Verkapselungsschale (HE) in der Aktivierungsposition eine minimale Anzahl von axialen Schmierölkanalabschnitten (41) aufweist; wobei verbleibende Zwischenverkapselungsschalen (11B, 11C, 11D) zwischen der ersten (11A) und der letzten (11E) Verkapselungsschale in der Aktivierungsposition Sektoren (31, 32, 33) aufweisen, die durch eine Anzahl von axialen Schmierölkanalabschnitten (41) bereitgestellt werden, die gleich oder kleiner ist als die (41) der unmittelbar vorhergehenden Verkapselungsschale in einer Reihe, die von der ersten (11A) zu der letzten (11E) Verkapselungsschale beginnt, um axiale Schmierölkanalabschnitte (41) von benachbarten Verkapselungsschalen (11A-11E) auszurichten, um eine Anzahl von Schmierölkanälen (A, B, C) zu realisieren, die von der ersten (11A) zur letzten (11E) Verkapselungsschale des Verkapselungsgehäuses (1) abnimmt.

8. Verkapselungsgehäuse nach Anspruch 7, wobei das Verkapselungsgehäuse fünf Verkapselungsschalen und drei Schmierölkanäle (A, B, C) umfasst und wiederum jede Verkapselungsschale (11A-11E) einen ersten (31), einen zweiten (32) und einen dritten (33) winkelmäßig versetzten Kreissektor umfasst, wobei:
- der erste Kreissektor (31) drei axiale Abschnitte von Schmierölkanälen (41) umfasst,
- der zweite Kreissektor (32) zwei Schmierölkanalabschnitte (41) und einen radialen Schmierölkanalabschnitt, vorzugsweise eine radiale Nut (42), umfasst,
- der dritte Kreissektor (33) einen Schmierölkanalabschnitt (41), einen radialen Schmierölkanalabschnitt, vorzugsweise eine radiale Nut (42), und eine Stoppwand (43) umfasst.

9. Verkapselungsgehäuse (1) nach einem oder mehreren der Ansprüche 6 bis 8, wobei der axiale Abschnitt des Schmierölkanals (41) ein Durchgangsloch umfasst, das zwischen zwei gegenüberliegenden Flächen des Körpers (12) der Verkapselungsschale (11A-11E) verläuft, die parallel zur ersten Achse des Lochs (13) für den Kolben oder die Stange (2) angeordnet ist, und der radiale Schmierölkanalabschnitt (42) eine Nut umfasst, die auf einer Fläche des Körpers (12) der Verkapselungsschale (11A-11E) ausgebildet und radial in Bezug auf die erste Achse des Lochs (13) für den Kolben oder die Stange angeordnet ist.

10. Verkapselungsgehäuse (1) nach einem oder mehreren der vorstehenden Ansprüche 4 bis 9, umfassend Sperrelemente zum Fixieren jeder Verkapselungsschale (11A-11E) in ihrer Position, vorzugsweise durch Koppeln jeder Verkapselungsschale (11A-11E) mit mindestens der Verteilungsschale (5), wobei noch bevorzugter die Sperrelemente mindestens eine, vorzugsweise zwei Zuganker (71) und jeweilige Zugankersitze (72) in jeder Verkapselungsschale (11A-11E) umfassen, in denen der Zuganker (71) untergebracht ist.

11. Verkapselungsgehäuse (1) nach einem oder mehreren der vorstehenden Ansprüche 4 bis 10, wobei der Körper (12) jeder Verkapselungsschale einen Verkapselungsschaleninnenteil (12A) und einen Verkapselungsschalenaußenteil (12B) umfasst, der den Verkapselungsschaleninnenteil (12A) umgibt, wobei die Sektoren (31, 32, 33) an dem Verkapselungsschaleninnenteil (12A) vorgesehen sind.

12. Verkapselungsgehäuse (1) nach Anspruch 11, wobei im zusammengebauten Zustand zwischen den Verkapselungsschalenaußenteilen (12 B) eines Paares benachbarte Verkapselungsschalen (11A-11E) ein hohler Durchgang (91) für ein fluides Kühlmittel ausgebildet ist.

13. Verkapselungsgehäuse (1) nach einem oder mehreren der Ansprüche 11 oder 12, ferner umfassend eine Außenhülle (8), die mindestens die Verkapselungsschalen (11A-11E) aufnimmt, wobei die Außenhülle (8) mindestens durch einen Kühlmitteleinlass (81) und einen Kühlmittelauslass (82) bereitgestellt ist, wobei Kühlmittellöcher (92) in jeder Verkapselungsschale (11A-11E) als Durchgangslöcher vorgesehen sind, die zwischen zwei gegenüberliegenden Flächen des Körperaußenteils (12B) jeder Verkapselungsschale (11A-11E) verlaufen, wobei mindestens ein Teil der Kühlmittellöcher (92) jeder Verkapselungsschale (11A-11E) in Fluidverbindung mit dem Durchgang (91) steht.

14. Kolbenmaschine, umfassend ein Verkapselungsgehäuse (1) nach den Ansprüchen 4 bis 14.

15. Verfahren zum Erzeugen einer Vielzahl von Betriebs- oder Hilfsfluidkanälen unterschiedlicher Länge und/oder Konfiguration in einer Maschine, vorzugsweise einer Kolbenmaschine, umfassend die folgenden Schritte:
A) Bereitstellen einer Vielzahl von Sektoren (31, 32, 33), die einen oder mehrere Kanalabschnitte enthalten,
B) Integrieren der Vielzahl von Sektoren (31, 32, 33) in einer entsprechenden Vielzahl von Verkapselungsschalen (11A-11E) nach einem der Ansprüche 1 bis 3; und
C) Positionieren der Verkapselungsschalen (11A-11E) der Vielzahl nebeneinander; wobei jede Verkapselungsschale (11A-11E) einen Satz von Sektoren (31, 32, 33) unterschiedlicher Typen integriert;
wobei mindestens einer oder nur einer der Sektoren (31, 32, 33) jeder Verkapselungsschale (11A-11E) zur Schaffung von Arbeits- oder Hilfsfluidkanälen verwendet wird.

## Revendications

1. Coupelle d'étanchéité(11A - 11E) pour un boîtier étanche(1) de machines à mouvement alternatif, comprenant :
un corps (12) avec un trou (13) pour le passage d'un piston ou d'une tige (2) de la machine à mouvement alternatif, ledit trou (13) présentant un premier axe longitudinal,
un logement de bague d'étanchéité (14) pour abriter une bague d'étanchéité (15) qui s'appuie de manière coulissante contre le piston ou tige (2) pour assurer l'étanchéité,
dans laquelle
ladite coupelle d'étanchéité (11A - 11E) comprend des secteurs (31, 32, 33) décalés de manière angulaire l'un par rapport à l'autre, chaque secteur (31, 32, 33) étant doté d'au moins des parties de conduit d'huile de lubrification (41, 42)
dans chaque secteur (31, 32, 33) de la coupelle d'emballage (11A - 11E), une pluralité de positions disponibles étant regroupées ;
chaque position disponible d'une telle pluralité étant alignée sur la même circonférence dont le centre est situé sur ledit premier axe ;
chaque position disponible de cette pluralité étant utilisée pour l'un entre :
- une partie de conduit d'huile de lubrification axiale (41) s'étendant entre des faces opposées de ladite coupelle d'étanchéité (11A - 11E),
- une partie de conduit d'huile de lubrification radiale, de préférence une rainure radiale (42), s'étendant radialement vers le siège de bague d'étanchéité (14) de la coupelle d'étanchéité (11A - 11E),
- une paroi d'arrêt (43) ;
dans laquelle différents secteurs (31, 32, 33) de la même coupelle d'étanchéité (11A - 11E) résentent lesdites positions disponibles utilisées pour un certain nombre de parties de conduit d'huile lubrifiante axiales (41) diminuant à partir d'un nombre maximum égal au nombre de secteurs (31, 32, 33), au moins l'une des positions disponibles restantes de chaque secteur (31, 32, 33) étant utilisée pour une partie de conduit d'huile de lubrification radiale, de préférence une rainure radiale (42).

2. Coupelle d'étanchéité (11A - 11E) selon la revendication 1, comprenant des premier (31), deuxième (32) et troisième (33) secteurs circulaires décalés angulairement, dans laquelle :
- le premier secteur circulaire (31) comprend trois parties axiales de conduits d'huile de lubrification (41),
- le deuxième secteur circulaire (32) comprend deux parties de conduit d'huile de lubrification (41) et une partie de conduit d'huile de lubrification radiale, de préférence une rainure radiale (42),
- le troisième secteur circulaire (33) comprend une partie de conduit d'huile de lubrification (41), une partie de conduit d'huile de lubrification radiale, de préférence une rainure radiale (42) et une paroi d'arrêt (43).

3. Coupelle d'étanchéité (11A - 11E) selon la revendication 1 ou 2, comprenant une partie interne de coupelle d'étanchéité (12A) et une partie externe de coupelle d'étanchéité (12B) entourant la partie interne de la coupelle d'étanchéité (12A), lesdits secteurs (31, 32, 33) étant ménagés au niveau de ladite partie interne de la coupelle d'étanchéité (12A).

4. Boîtier étanche (1) pour une machine à mouvements alternatifs afin de fournir un joint le long et autour d'au moins une partie d'un piston mobile (2) ou d'une tige de piston de la machine à mouvements alternatifs,
comprenant une pluralité de coupelles d'étanchéité (11 A - 11E) selon l'une quelconque des revendications précédentes ;
lesdites coupelles d'étanchéité (11A - 11E) étant alignées les unes avec les autres en série par rapport aux trous respectifs (13) pour le passage du piston ou de la tige (2) ;
ledit boîtier d'étanchéité (1) comprenant une pluralité de conduits d'huile de lubrification (A, B, C) pour fournir de l'huile de lubrification à partir d'une extrémité du boîtier étanche dans une zone de logement de bague d'étanchéité (14) ;
dans lequel
toutes les coupelles d'étanchéité (11A - 11E) du boîtier étanche (1) sont identiques les unes aux autres ;
les coupelles d'étanchéité (11A - 11E) pouvant être positionnées sélectivement les unes avec les autres pour amener, pour chaque coupelle d'étanchéité (11A - 11E), un secteur (31, 32, 33) à la fois dans une position d'activation, dans une position d'activation telle qu'au moins certaines des parties de conduit d'huile de lubrification (41, 42) dudit secteur (31, 32, 33) étant opérationnellement raccordées aux parties de conduit d'huile de lubrification (41, 42) d'un secteur (31, 32, 33) dans la condition d'activation d'une coupelle d'étanchéité adjacente (11A - 11E) afin de former lesdits conduits d'huile de lubrification (A, B, C) ;
les coupelles d'étanchéité (11A - 11E) pouvant être verrouillées chacune par l'autre dans une position correspondant à la position d'activation d'un secteur circulaire (31, 32, 33).

5. Coupelle d'étanchéité (1) selon la revendication 4, comprenant en outre une coupelle de distribution (5) pourvue au moins d'un conduit d'alimentation de lubrifiant fixe (51), ladite position d'activation correspondant à une position dans laquelle au moins certaines des parties de conduit d'huile de lubrification (41, 42) d'un secteur (31, 32, 33) dans une position d'activation sont en communication fluidique avec ledit conduit d'alimentation de lubrifiant fixe (51).

6. Boîtier étanche (1) selon la revendication 4 ou 5, dans lequel chaque secteur est un secteur circulaire (31, 32, 33), les coupelles d'étanchéité (11A - 11E) pouvant être positionnées sélectivement les unes avec les autres, au moyen d'une rotation autour d'un premier axe coïncidant avec un axe longitudinal central du trou (13) pour le piston ou la tige (2).

7. Boîtier étanche (1) selon la revendication 6, dans laquelle, pour chaque secteur (31, 32, 33) de chaque coupelle d'étanchéité (11A - 11E), une pluralité de positions disponibles sont regroupées ;
chaque position disponible d'une telle pluralité étant alignée sur la même circonférence dont le centre est situé sur ledit premier axe ;
chaque position disponible de cette pluralité étant utilisée pour l'un entre :
- une partie de conduit d'huile de lubrification axiale (41) s'étendant entre des faces opposées de ladite coupelle d'étanchéité (11A - 11E),
- une partie de conduit d'huile de lubrification radiale, de préférence une rainure radiale (42), s'étendant radialement vers le logement de bague d'étanchéité (14) de la coupelle d'étanchéité (11A - 11E),
- une paroi d'arrêt (43) ;
dans lequel, pour chaque coupelle d'étanchéité (11A - 11E), le nombre de secteurs (31, 32, 33) est au moins égal ou supérieur au nombre de conduits d'huile de lubrification (A, B, C) du boîtier étanche (1) ;
dans lequel différents secteurs (31, 32, 33) de la même coupelle d'étanchéité (11 A - 11E) présentent des positions disponibles pour un certain nombre de parties de conduit d'huile lubrifiante axiales (41), en diminuant à partir d'un nombre maximum égal au nombre de conduits d'huile de lubrification (A, B, C) du boîtier étanche (1), au moins une des positions disponibles restantes de chaque secteur (31, 32, 33) étant utilisée pour une une partie radiale du conduit d'huile de lubrification, de préférence une rainure radiale (42) ;
lesdites coupelles d'étanchéité (11A - 11E) étant assemblées pour former le boîtier étanche, à partir d'une première coupelle d'étanchéité (11A) jusqu'à une dernière coupelle d'étanchéité (11E) ;
dans lequel la première coupelle d'étanchéité (11A) présente, dans ladite position d'activation, un secteur (31) présentant un nombre maximum de parties de conduit d'huile de lubrification axiales (41) ;
ladite dernière coupelle d'étanchéité (11E) présentant, dans ladite position d'activation, un nombre minimum de parties de conduit d'huile de lubrification axiales (41) ;
les coupelles d'étanchéité intermédiaires restantes (11B, 11C, 11D) entre la première (11A) et la dernière (11E) coupelles d'étanchéité, présentant, dans ladite position d'activation, des secteurs (31, 32, 33) fournis par un certain nombre de parties de conduits d'huile de lubrification axiales (41) égales ou inférieures à celles (41) de la coupelle d'étanchéité immédiatement précédente dans une progression partant de la première (11A) à la dernière (11E) coupelle d'étanchéité, de façon à aligner la partie de conduit d'huile de lubrification axiale (41) des coupelles d'étanchéité adjacentes (11 A - 11E) pour réaliser un certain nombre de conduits d'huile de lubrification (A, B, C) en diminuant à partir de la première (11A) à la dernière (11E) coupelles d'étanchéité dudit boîtier étanche (1).

8. Boîtier étanche selon la revendication 7, dans lequel le boîtier étanche comprend cinq coupelles d'étanchéité et trois conduits d'huile de lubrification (A, B, C), et, à son tour, chaque coupelle d'étanchéité (11A - 11E) comprend un premier (31), un deuxième (32) et un troisième (33) secteurs circulaires décalés angulairement, dans lequel :
- le premier secteur circulaire (31) comporte trois parties axiales de conduits d'huile de lubrification (41),
- le deuxième secteur circulaire (32) comprend deux parties de conduit d'huile de lubrification (41) et une partie de conduit d'huile de lubrification radiale, de préférence une rainure radiale (42),
- le troisième secteur circulaire (33) comprend une portion de conduit d'huile de lubrification (41), une partie de conduit d'huile de lubrification radiale, de préférence une rainure radiale (42) et une paroi d'arrêt (43).

9. Boîtier étanche (1) selon une ou plusieurs des revendications 6 à 8, dans lequel la partie axiale du conduit d'huile de lubrification (41) comprend un trou traversant passant entre deux faces opposées du corps (12) de la coupelle d'étanchéité (11A - 11E) disposé radialement au premier axe du trou (13) pour le piston ou la tige (2) et la partie de conduit d'huile de lubrification radiale (42) comprend une rainure ménagée sur une face du corps (12) de la coupelle d'étanchéité (11A - 11E) et agencée radialement par rapport au premier axe du trou (13) pour le piston ou la tige.

10. Boîtier étanche (1) selon une ou plusieurs des revendications précédentes 4 à 9, comprenant des éléments de blocage pour fixer en position chaque coupelle d'étanchéité (11 A - 11E), de préférence en raccordant chaque coupelle d'étanchéité (11 A - 11E) avec au moins une coupelle de distribution (5), encore plus préférablement lesdits éléments de blocage comprenant au moins une, de préférence deux, tiges de liaison (71) et des logements de tiges de liaison respectifs (72) dans chaque coupelle d'étanchéité (11 A - 11E), dans lequel la tige de liaison (71) est abritée.

11. Boîtier étanche (1) selon une ou plusieurs des revendications précédentes 4 à 10, dans lequel le corps (12) de chaque coupelle d'étanchéité comprend une partie de coupelle d'étanchéité interne (12A) et une partie de coupelle d'étanchéité externe (12B) entourant la partie interne de coupelle d'étanchéité (12A), lesdits secteurs (31, 32, 33) étant ménagés au niveau de la partie interne de ladite coupelle d'étanchéité (12A).

12. Boîtier étanche (1) selon la revendication 11, dans lequel, dans l'état assemblé, entre les parties externes de coupelle d'étanchéité (12B) d'une paire de coupelles d'étanchéité adjacentes (11A - 11E), un passage creux (91) est réalisé pour un fluide de refroidissement.

13. Boîtier étanche (1) selon une ou plusieurs des revendications 11 ou 12, comprenant en outre une gaine externe (8) qui abrite au moins les coupelles d'étanchéité (11 A - 11E), ladite gaine externe (8) étant pourvue d'au moins une entrée de liquide de refroidissement (81) et d'une sortie de liquide de refroidissement (82), les trous de liquide de refroidissement (92) étant ménagés dans chaque coupelle d'étanchéité (11A - 11E) par le biais de trous passants entre deux faces opposées de la partie externe du corps (12B) de chaque coupelle d'étanchéité (11 A - 11E), au moins une partie desdits trous de liquide de refroidissement (92) de chaque coupelle d'étanchéité (11 A - 11E) étant en communication fluidique avec ledit passage (91).

14. Machine à mouvements alternatifs comprenant un boîtier étanche (1) selon les revendications 4 à 14.

15. Procédé de création d'une pluralité de conduites de fluide de service ou auxiliaires de longueur et/ou de configuration différentes dans une machine, de préférence une machine à mouvements alternatifs, comprenant les étapes consistant à :
A) fournir une pluralité de secteurs (31, 32, 33) incorporant une ou plusieurs parties de conduit,
B) intégrer la pluralité de secteurs (31, 32, 33) dans une pluralité correspondante de coupelles d'étanchéité (11A - 11E) selon l'une quelconque des revendications 1 à 3 ;
et
C) positionner les coupelles d'étanchéité (11A - 11E) de ladite pluralité de manière adjacente les unes aux autres ;
dans lequel chacune des coupelles d'étanchéité (11A - 11E) intègre un ensemble de secteurs (31, 32, 33) de types différents ;
dans lequel au moins un ou un seul des secteurs (31, 32, 33) de chaque coupelle d'étanchéité (11A - 11E) est utilisé pour créer des conduits de fluide de service ou auxiliaires.
